# EUROPEAN PATENT SPECIFICATION

(11) **EP 3 611 848 B1**
(45) Date of publication and mention of the grant of the patent: **16.08.2023**
(21) Application number: 18776662.1
(22) Date of filing: 29.03.2018
(51) Int. Cl.: H04J 14/02, H04B 10/032, H04L 45/28, H04L 45/12, H04L 45/00, H04L 45/42

(54) **METHOD AND APPARATUS FOR GENERATING SHARED RISK LINK GROUP**
VERFAHREN UND VORRICHTUNG ZUR ERKENNUNG EINER SHARED-RISK-LINK-GRUPPE
PROCÉDÉ ET APPAREIL DE GÉNÉRATION D'UN GROUPE DE LIAISONS À RISQUE PARTAGÉ

(30) Priority: 29.03.2017 CN 201710198249
(43) Date of publication of application: 19.02.2020
(73) Proprietor: ZTE Corporation, Shenzhen, Guangdong 518057 (CN)
(72) Inventor: QIAN, Jia, Shenzhen Guangdong 518057 (CN); LI, Hongbiao, Shenzhen Guangdong 518057 (CN)
(74) Representative: Herzog IP Patentanwalts GmbH
(86) International application number: PCT/CN2018/081035
(87) International publication number: WO 2018/177354

(56) References cited:
- WO-A1-2008/058574
- CN-A- 1 866 856
- CN-A- 102 843 618
- CN-A- 105 763 344
- US-A1- 2007 211 732
- US-A1- 2014 258 486
- US-A1- 2017 063 666
- JOSE SILVA ET AL: "An heuristic for maximally SRLG-disjoint path pairs calculation", ULTRA MODERN TELECOMMUNICATIONS AND CONTROL SYSTEMS AND WORKSHOPS (ICUMT), 2011 3RD INTERNATIONAL CONGRESS ON, IEEE, 5 October 2011 (2011-10-05), pages 1-8, XP032021413, ISBN: 978-1-4577-0682-0

## Description

### Field of the Invention

The disclosure relates to communication technologies, such as a method and an apparatus for generating a shared risk link group.

### Background of the Invention

According to statistical forecasts, the growth rate of IP traffic is growing threefold in 18 months, which has exceeded the speed of Moore's law and is called "post-Moore era". The growth of traffic is mainly driven by broadband services such as video. For example, China Telecom's 163 backbone network needs to be expanded every year due to the rapid growth of traffic. The traditional way of expansion is mainly achieved by increasing network nodes and network layers, which will bring about the problem of rising Capital Expenditure (CAPEX) and Operating Expense (OPEX) costs. In the case of slow revenue growth, the profit margin of operators will be increasingly reduced.

In order to obtain reasonable bandwidth costs, the IP backbone network architecture should evolve toward flat and fully interconnected. From the trend of technology development, the IP layer and the optical layer are constantly merging and they have gone through four stages of development. The first stage is an IP over Dense Wavelength Division Multiplexing (DWDM) technology; the second stage is an IP over Optical Transport Network (OTN); the third stage is an IP over OTN/ Automatic Switch Optical Network (ASON); the fourth stage is called "IP + optical collaboration," and its main feature is to realize the interworking of the IP layer and the transport layer through a User Network Interface (UNI), and optimize the multi-layer network to obtain reasonable network construction cost and bandwidth cost, thus coping with the challenges of the post-Moore era.

The "IP + optical collaboration" poses some new challenges to operation and maintenance, one of which is the difficulty of cross-layer network traffic and protection planning. Statistics show that more than 50% of the core router traffic is through traffic. With the growth of traffic, the router is constantly expanding, which will produce high expansion cost. In the case of the same grade rate, DWDM/OTN is cheaper than IP (router), and thus the basic idea of traffic optimization is: the large-particle service is directly transmitted through a transport layer such as DWDM/OTN, called Offload or Bypass; and the small-particle service is still carried by the router for statistical multiplexing, wherein the Bypass utilizes a cheaper wavelength division equipment to relieve the expansion pressure of the core router and reduce the number of hops for service forwarding. In this way, the cost of the whole network is reduced, and the quality of the service is improved.

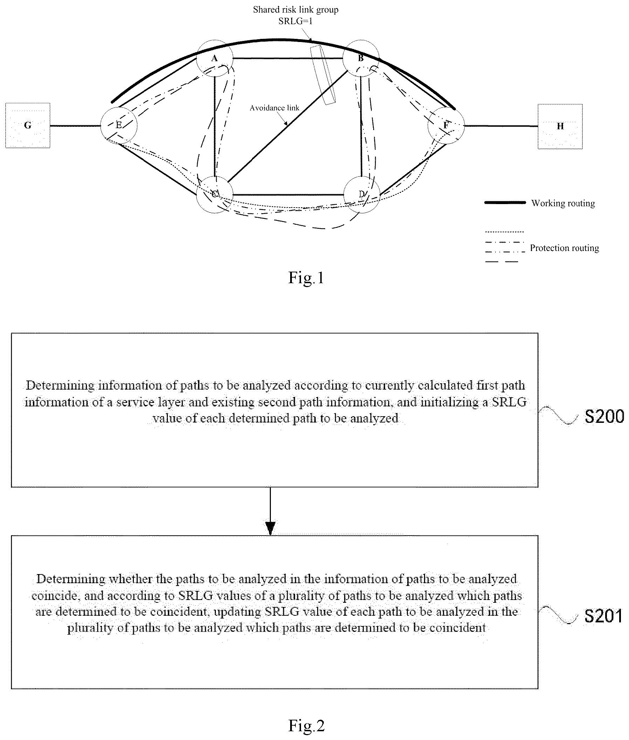

In order to realize Bypass-based intelligent network optimization, it is necessary to solve a plurality of cross-layer network planning problems, such as a multi-layer protection problem. One optical layer failure may lead to a plurality of failures in the IP layer; the cross-layer planning must ensure that the IP layer has the Shared Risk Link Group (SRLG) separation for protecting services; and if the links belong to the same shared risk link group, then it means that these links share the same risk. For example, the optical fiber links in the same pipeline or a plurality of wavelengths in the same optical fiber share the same risk. a plurality of links belonging to the same shared risk link group have the same SRLG value, for example, the SRLG value of each optical fiber of a plurality of optical fibers which are located in the same optical fiber pipeline can set to be 1. When the same pipeline where those optical fiber links are located breaks down, all optical fiber links of the pipeline will break down, and then the services transmitted through these optical fibers will be affected. Fig. 1 is a schematic diagram of links sharing the same risk in the related art. As shown in Fig. 1, a heavy line represents a working path; a dashed line and a dot dash line represent protection paths, and one-section link and another-section link of the working path of the service have the same SRLG, and therefore, the protection of the working path or restored path needs to avoid this link (the avoidance path as shown in Fig. 1).

In the current IP scenario, the configuration of SRLG depends entirely on manual configuration, and whether the SRLG value is reasonable or not depends entirely on human judgment. However, since it is difficult for the manual configuration to ensure the SRLG value to be updated timely and correctly, it is difficult to ensure the effectiveness of the SRLG separation for protecting services in the IP layer. In an IP+ optical collaboration scenario, the optical domain connection exists only as an IP link, and at the moment, the SRLG configuration problem also exists on a virtual IP layer link provided by the optical domain connection. If the method for manually configuring the SRLG is still used in the IP+ optical collaboration scenario, the maintenance workload is unacceptable.

US 200721732 A1 discloses a method of setting shared risk link group identification information (SRLG ID) which is one of link properties employed for calculating a route for a path in a communications network including nodes and links for interconnecting the nodes, and indicates a link group which shares resources, comprises the step of assigning a number of SRLG IDs to the link group in accordance with a failure rate of resources shared by that link group. A route calculating method for calculating routes for a working path and a standby path comprises the step of calculating the routes such that a minimum number of SRLG IDs duplicate between all links on the route of the working path and all links on the route of the standby path.

It is also disclosed that an heuristic for maximally SRLG-disjoint path pairs calculation, considering a min-min formulation, designated TA-max, is proposed, which is a modification of the Trap Avoidance (TA) algorithm (José Silva et al., University of Coimbra, 2011).

WO 2008058574 A1 discloses a method of processing data for computing alternative paths in an optical network including making a list of groups that comprise links wherein the links in a group share a risk of being affected by the same fault, comparing each group with other groups in the list to determine whether each group includes the same links as another group, and deleting the groups that comprise links which are a subset of the links in another group.

### Summary of the Invention

The following is a summary of the subject matter described in detail in this disclosure, and the summary is not intended to limit the protection scope of the claims. The disclosure provides a method and an apparatus for generating a shared risk link group, which can automatically and simply implement the configuration of the SRLG value.

One embodiment of the disclosure provides a method for generating a shared risk link group, including:
determining the list of information of paths to be analyzed according to currently calculated first path information of a service layer and existing second path information, and initializing a Shared Risk Link Group SRLG value of each determined path to be analyzed;
determining whether the paths to be analyzed in the list of information of paths to be analyzed coincide, and according to SRLG values of a plurality of paths to be analyzed which paths are determined to be coincident, updating SRLG value of each path to be analyzed in the plurality of paths to be analyzed which paths are determined to be coincident.

Said determining the list of information of paths to be analyzed comprises: initializing the list of information of paths to be analyzed by using the second path information, and if the second path information is empty, respectively identifying each path in the first path information as a new path, and initializing a virtual SRLG value of each path identified as a new path; determining, according to a protection attribute of each path identified as a new path in the first path information, a position where each path identified as a new path is inserted into the list of information of paths to be analyzed, so as to form the list of information of paths to be analyzed.

The disclosure further provides an apparatus for generating a shared risk link group, including: a calculation unit, an analysis unit and a storage unit, wherein
the calculation unit, configured to determine a list of information of paths to be analyzed according to currently calculated first path information of a service layer and existing second path information, and initialize a Shared Risk Link Group SRLG value of each determined path to be analyzed;
the analysis unit, configured to determine whether the paths to be analyzed in the list of information of paths to be analyzed coincide, and according to SRLG values of a plurality of paths to be analyzed which paths are determined to be coincident, update the SRLG value of each path to be analyzed in the plurality of paths to be analyzed which paths are determined to be coincident; and store a result of the analysis in the storage unit;
the storage unit, configured to store the existing second path information and the first path information currently calculated.

The calculation unit is further configured to determine the list of information of paths to be analyzed by means of: initializing the list of information of paths to be analyzed by using the second path information, and if the second path information is empty, respectively identifying each path in the first path information as a new path, and initializing a virtual SRLG value of each path identified as a new path; determining, according to a protection attribute of each path identified as a new path in the first path information, a position where each path identified as a new path is inserted into the list of information of paths to be analyzed, so as to form the list of information of paths to be analyzed.

The disclosure further provides a computer readable storage medium, storing a computer program, the computer program configured to perform the method for generating a shared risk link group in the above aspect.

After reading and understanding the accompanying drawings and detailed descriptions, other aspects can be understood.

### Brief Description of the Drawings

The accompanying drawings described herein are used to provide further understanding of the disclosure and constitute a part of the application. The illustrative embodiments of the disclosure and the descriptions thereof are used to explain the disclosure, and do not constitute improper restrictions on the disclosure. In the drawings:
Fig. 1 is a schematic diagram of links sharing the same risk in the related art;
Fig. 2 is a flowchart of a method for generating a shared risk link group according to an embodiment of the disclosure;
Fig. 3 is a flowchart of an embodiment of a method for generating a shared risk link group according to an embodiment of the disclosure;
Fig. 4 is a schematic flow diagram of an embodiment of a method for constructing a list of paths to be analyzed in a method for generating a shared risk link group according to an embodiment of the disclosure;
Fig. 5 is a schematic flow diagram of an embodiment of a method for analyzing a risk in a method for generating a shared risk link group according to an embodiment of the disclosure;
Fig. 6 is a schematic flow diagram of an embodiment of a method for adding new list item in a method for generating a shared risk link group according to an embodiment of the disclosure;
Fig. 7 is a schematic diagram of the composition and structure of an apparatus for generating a shared risk link group according to an embodiment of the disclosure;
Fig. 8 is a topological diagram of a method for generating a shared risk link group according to a first embodiment of the disclosure;
Fig. 9 is a topological diagram of a calculation result of a service layer path of a method for generating a shared risk link group according to a first embodiment of the disclosure;
Fig. 10 is a topological diagram of a client layer link and an SRLG value thereof of a method for generating a shared risk link group according to a first embodiment of the disclosure;
Fig. 11 is a topological diagram of a method for generating a shared risk link group according to a second embodiment of the disclosure;
Fig. 12 is a topological diagram of a calculation result of a service layer path of a method for generating a shared risk link group according to a second embodiment of the disclosure;
Fig. 13 is a topological diagram of a client layer link and an SRLG value thereof of a method for generating a shared risk link group according to a second embodiment of the disclosure;
Fig. 14 is a topological diagram before implementation of a third embodiment of a method for generating a shared risk link group in the disclosure;
Fig. 15 is a topological diagram of a service layer path calculation result of a method for generating a shared risk link group according to a third embodiment of the disclosure;
Fig. 16 is a topological diagram of a client layer link and an SRLG value thereof of a method for generating a shared risk link group according to a third embodiment of the disclosure.

### Detailed Description of the Embodiments

The embodiments of the disclosure will be described in detail below with reference to the accompanying drawings.

Through analysis, the inventor of the disclosure believes that if such SRLG value of the links sharing the same risk automatically and directly inherits the SRLG value of the optical domain, the amount of data will be large, and the IP network topology will be changed and the operation and maintenance personnel of the IP network cannot accept such a real-time dynamic change. In addition, for the survivability of the end-to-end service, a multi-layer protection planning will be considered. When the optical domain has attributes such as protection or dynamic re-routing, a protection switching or dynamic re-routing will be initiated when the optical domain fails, and at the moment, the SRLG value of the optical domain will change, thereby causing the change of the SRLG of the IP layer link , and further causing continuous turbulence of the network. Frequent changes in the IP layer network topology may result in frequent recalculation of the IP layer service path and cause instability of the IP network, thereby greatly increasing the maintenance workload.

Therefore, the disclosure provides a technical solution for generating a shared risk link group, which can not only automatically generate the SRLG value, but also greatly reduce the number of SRLGs, and brought about changes to the network topology.

Fig. 2 is a flowchart of a method for generating a shared risk link group in the disclosure. As shown in Fig. 2, the method includes steps S200 and S201.

At S200, determining information of paths to be analyzed according to currently calculated first path information of a service layer and existing second path information, and initializing a Shared Risk Link Group SRLG value of each determined path to be analyzed.

In one embodiment, determining information of paths to be analyzed (also referred to herein as a method for forming a list of paths to be analyzed) in this step may include:
initializing the information of paths to be analyzed by using the second path information, and if the second path information is empty, respectively identifying each path in the first path information as a new path, and initializing a virtual SRLG value of each path identified as a new path; determining, according to a protection attribute of each path identified as a new path in the first path information, a position where each path identified as a new path is inserted into the information of paths to be analyzed, so as to form the information of paths to be analyzed;
if the second path information is not empty, traversing the first path information and the second path information respectively; for each path in the first path information, if a path identifier of the path in the first path information exists in the second path information, replacing the path, corresponding to the path identifier in the information of paths to be analyzed, by using the path in the first path information, and retaining an initial virtual SRLG value of the path corresponding to the path identifier, so as to form the information of paths to be analyzed; if the path identifier of the path in the first path information does not exist in the second path information, determining, according to a protection attribute of the path, a position where the path is inserted into the information of paths to be analyzed, so as to form the information of paths to be analyzed.

An example is given to illustrate the case in which the second information is not empty, assuming that the path information exists in a form of a list. First, a first path in a first path information list is fetched, and a second path information list is traversed; if an old path having the same path identifier as that of the first path can be found in the second path information list, then the first path is used to replace the old path having the same path identifier as that of the first path in the list of path to be analyzed, and the initial virtual SRLG value of the old path is retained; if an old path having the same path identifier as that of the first path cannot be found in the second path information list, the position where the first path is inserted into the information of paths to be analyzed is determined according to the protection attribute of the first path, so as to form the information of paths to be analyzed; then a next path in the first path information list is fetched to continue the above mentioned process in the way mentioned above, until all paths in the first path information list are subjected to the above process.

In an embodiment, there are many implementation methods for initializing the virtual SRLG value, as long as the uniqueness of the initialized SRLG values of all links is ensured; the disclosure does not limit the method for initializing the virtual SRLG value, and the specific implementation thereof is not used for limiting the protection scope of the disclosure.

In an embodiment, determining, according to a protection attribute of each path identified as a new path in the first path information, a position where each path identified as a new path is inserted into the information of paths to be analyzed, so as to form the information of paths to be analyzed (also referred to herein as a method for adding new list item), includes:
if the protection attribute of each path identified as a new path is unprotected or protected, inserting each path identified as a new path before the first path that is identified as a new path and has a recoverable protection attribute in a list of paths to be analyzed; if the protection attribute of each path identified as a new path is recoverable, inserting the path into the end of the list of paths to be analyzed.

Before S200, the method further includes: receiving a path calculation request identifiable in the service layer; and calculating the first path information of the service layer.

At S201, determining whether the paths to be analyzed in the information of paths to be analyzed coincide with other paths to be analyzed, and according to SRLG values of a plurality of paths to be analyzed which paths are determined to be coincident, updating SRLG value of each path to be analyzed in the plurality of paths to be analyzed which paths are determined to be coincident.

In one embodiment, this step (also referred to herein as a method for analyzing a risk) may include:
performing a traversal analysis from a second path in the information of paths to be analyzed, and if the path is a new path, then comparing the path with all paths before the path to judge whether a coincident link or a coincident node exists, and if a coincident link or a coincident node exists, taking a union set of a virtual SRLG value of the path having the coincident link or coincident node with the path and an SRLG value of the path; otherwise, continuing the comparison until all paths before the path are completely compared; continuing a traversal analysis of a next path in the information of paths to be analyzed, until analyses of SRLG values of all new paths in the information of paths to be analyzed are completed.

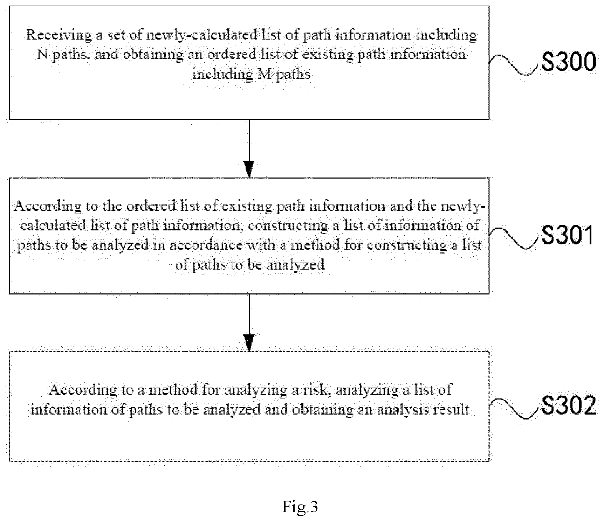

Fig. 3 is a flowchart of a method for generating a shared risk link group according to an embodiment of the disclosure. It is assumed that the path information exists in form of a list, and as shown in Fig. 3, the method includes step S300, step S301 and step S302 according to an embodiment.

At S300, receiving a set of newly-calculated list of path information (e.g., represented by Pb) including N paths, and obtaining an ordered list (e.g., represented by Pa) of existing path information including M paths.

At S301, according to the ordered list of existing path information and the newly-calculated list of path information, constructing a list of information of paths to be analyzed in accordance with a method for constructing a list of paths to be analyzed.

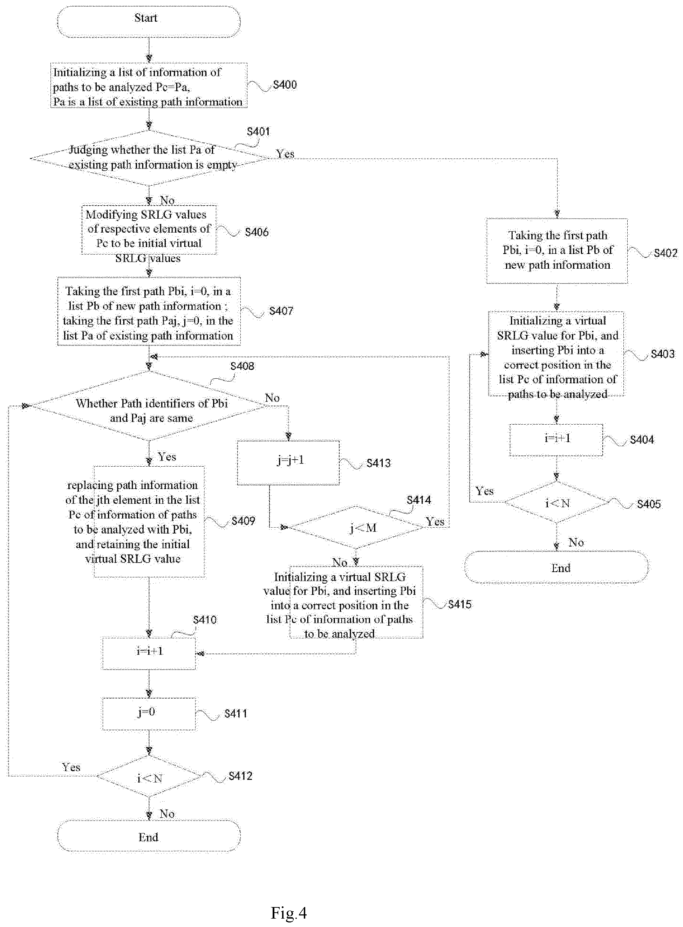

Fig. 4 is a schematic flow diagram of a method for constructing a list of paths to be analyzed in a method for generating a shared risk link group according to an embodiment of the disclosure, and as shown in Fig. 4, the embodiment of the method for constructing a list of paths to be analyzed includes step S400 to step S415.

At S400, initializing a list of information of paths to be analyzed, Pc=Pa, and Pa is a list of existing path information.

At S401, judging whether the list Pa of existing path information is empty; if yes, S402 is carried out; if not, S406 is carried out.

At S402, taking the first path Pbᵢ, i=0, in a list Pb of new path information.

At S403, initializing a virtual SRLG value for Pbᵢ, and inserting Pbᵢ into a correct position in the list Pc of information of paths to be analyzed according to the method for adding new list item.

At S404, assigning i the value (i+1).

At S405, judging whether i is smaller than N, and if i is smaller than N, returning to S403; otherwise, ending the process.

At S406, modifying SRLG values of respective paths in the list Pc of information of paths to be analyzed to be initial virtual SRLG values.

At S407, taking the first path Pbᵢ, i=0, in a list Pb of new path information, and taking the first path Paⱼ, j=0, in the list Pa of existing path information.

At S408, judging whether path identifiers in the path Pbᵢ and in the list Pa of existing path information are same; if yes, S409 is carried out; otherwise, S413 is carried out.

At S409, replacing path information of the jth element in the list Pc of information of paths to be analyzed with Pbᵢ, and retaining the initial virtual SRLG value.

At S410, assigning i the value (i+1).

At S411, assigning j the value 0.

At S412, judging whether i is smaller than N, and if i is smaller than N, returning to S408; otherwise, ending the process.

At S413, assigning j the value (j+1).

At S414, judging whether j is smaller than M, and if i is smaller than M, returning to S408; otherwise, carrying out S415.

At S415, initializing a virtual SRLG value for the path Pbᵢ, and inserting the path Pbᵢ into a correct position in the list Pc of paths to be analyzed according to the method for adding new list item; and then returning to S410.

At S302, according to the method for analyzing a risk, analyzing a list of information of paths to be analyzed, and obtaining an analysis result.

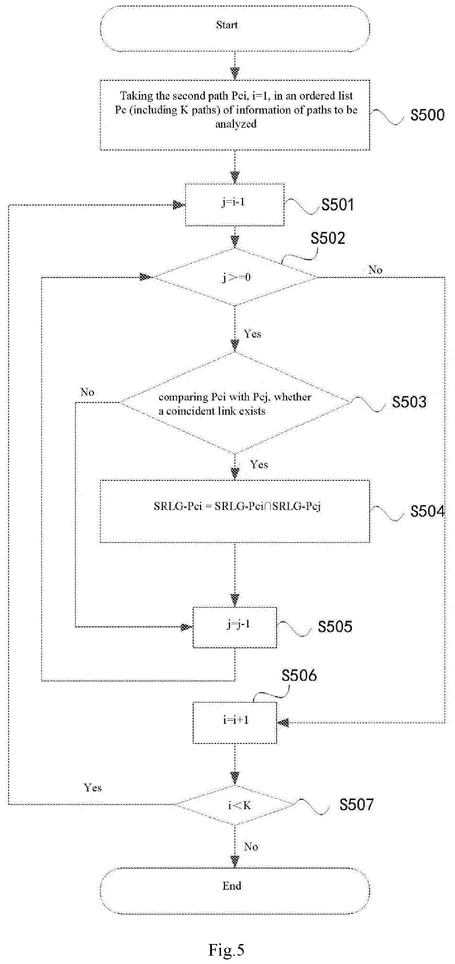

Fig. 5 is a schematic flow diagram of a method for analyzing a risk in a method for generating a shared risk link group according to an embodiment of the disclosure, and as shown in Fig. 5, the method includes step S500 to step S507.

At S500, taking the second path Pcᵢ, i=1, in an ordered list Pc (assumed to include K paths) of information of paths to be analyzed.

At S501, assigning j the value (j-1).

At S502, judging whether j is greater than or equal to 0, and if yes, S503 is carried out; otherwise, S506 is carried out.

At S503, comparing the nodes and links where the paths of Pcᵢ and Pcⱼ pass through, and if the two have a coincident node or a coincident link, S504 is carried out; otherwise, S505 is carried out.

At S504, taking the SRLG-Pcᵢ (i.e., the final SRLG value) as a union set of SRLG-Pcᵢ and SRLG-Pcⱼ.

At S505, assigning j the value (j-1).

At S506, assigning i the value (i+1).

At S507, judging whether j is smaller than K, and if yes, S501 is carried out; otherwise, the process is ended. Where, K is the number of paths in the list Pc of information of paths to be analyzed.

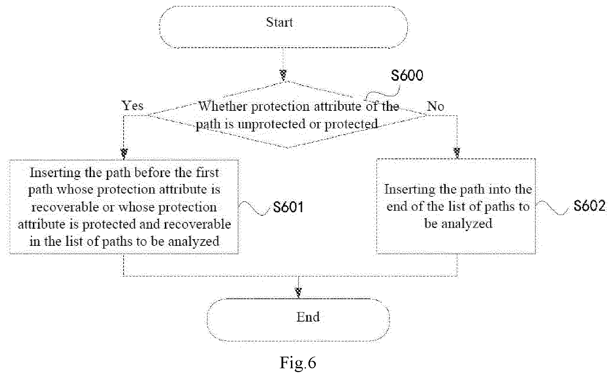

Fig. 6 is a schematic flow diagram of a method for adding new list item in a method for generating a shared risk link group according to an embodiment of the disclosure, and as shown in Fig. 6, step S600 to step S602 are included.

At S600, judging whether the protection attribute of the path is unprotected or protected, and if being unprotected or protected, S601 is carried out; otherwise, S602 is carried out.

At S601, inserting the path before the first path whose protection attribute is recoverable or whose protection attribute is protected and recoverable in the list of the paths to be analyzed, and the process is ended.

At S602, inserting the path into the end of the list of paths to be analyzed.

With the technical solution provided by the disclosure, the configuration of the SRLG value is automatically and simply implemented. The method for generating a shared risk link group provided by the disclosure obtains a virtual SRLG of the client layer through a link analysis of a service layer path, which reduces the number of SRLGs of the client layer and the changes of the network SRLG of the client layer to some extent, and causes the acquisition of the network topology information of the client layer to be more accurate and more stable.

The disclosure further provides a computer readable storage medium, storing a computer program, the computer program is configured to perform the method for generating a shared risk link group according to any one of the methods mentioned herein.

The disclosure further provides an apparatus for implementing a method of generating a shared risk link group, including at least a processor configured for executing executable instructions and a memory;
wherein a computer executable instruction is stored in the memory, and the computer executable instruction includes:
determining information of paths to be analyzed according to currently calculated first path information of a service layer and existing second path information, and initializing an SRLG value of each newly-determined path to be analyzed; determining whether the paths to be analyzed in the information of paths to be analyzed coincide, and according to the SRLG values of a plurality of paths to be analyzed which paths are determined to be coincident, updating SRLG value of each path to be analyzed in the plurality of paths to be analyzed which paths are determined to be coincident.

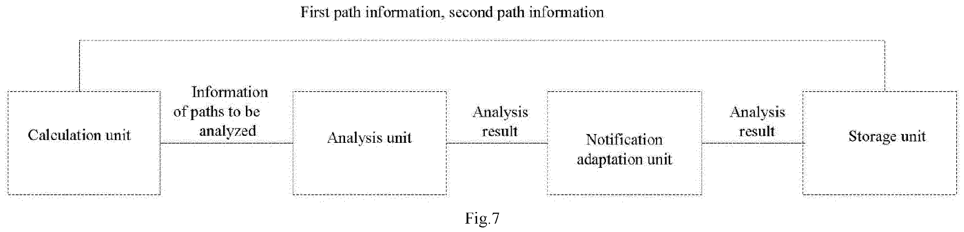

Fig. 7 is a schematic diagram of the composition and structure of an apparatus for generating a shared risk link group in the disclosure, and as shown in Fig. 7, the apparatus at least includes: a calculation unit, an analysis unit and a storage unit, wherein
the calculation unit is configured to determine information of paths to be analyzed according to currently calculated first path information of a service layer and existing second path information, and initialize a Shared Risk Link Group SRLG value of each determined path to be analyzed;
the analysis unit is configured to determine whether the paths to be analyzed in the information of paths to be analyzed coincide, and according to the SRLG values of a plurality of paths to be analyzed which paths are determined to be coincident, to update SRLG value of each path to be analyzed in the plurality of paths to be analyzed which paths are determined to be coincident; and a result of the analysis is stored in the storage unit;
the storage unit is configured to store the existing second path information and the first path information currently calculated.

The calculation unit is further configured to receive a path calculation request identifiable in the service layer; calculate the first path information of the current service layer and store the first path information in the storage unit.

In an embodiment, the calculation unit is further configured to send a path data acquisition request to the storage unit and receive path information from the storage unit;
the analysis unit is further configured to send a path data acquisition request to the storage unit and receive path information from the storage unit.

In one embodiment, the storage unit is specifically configured to receive an analysis result from the analysis unit and store an analyzed path result; receive the data acquisition request from the calculation unit, and return a stored analyzed path result to the calculation unit; receive the data acquisition request from the analysis unit, and return a stored analyzed path result to the analysis unit.

In an embodiment, the calculation unit determines the information of paths to be analyzed by means of:
initializing the information of paths to be analyzed by using the second path information, and if the second path information is empty, respectively identifying each path in the first path information as a new path, and initializing a virtual SRLG value of each path identified as a new path; determining, according to a protection attribute of each path identified as a new path in the first path information, a position where each path identified as a new path is inserted into the information of paths to be analyzed, so as to form the information of paths to be analyzed;
if the second path information is not empty, traversing the first path information and the second path information respectively; for each path in the first path information, if a path identifier of the path in the first path information exists in the second path information, replacing the path, corresponding to the path identifier in the information of paths to be analyzed, by using the path in the first path information, and retaining an initial virtual SRLG value of the path corresponding to the path identifier, so as to form the information of paths to be analyzed; if the path identifier of the path in the first path information does not exist in the second path information, determining, according to a protection attribute of the path, a position where the path is inserted into the information of paths to be analyzed, so as to form the information of paths to be analyzed.

In an embodiment, the calculation unit determines, according to a protection attribute of each path identified as a new path in the first path information, a position where each path identified as a new path is inserted into the information of paths to be analyzed, so as to form the information of paths to be analyzed, by means of:
if the protection attribute of each path identified as a new path is unprotected or protected, inserting each path identified as a new path before a path that is firstly identified as a new path and has a protection attribute of being recoverable in a list of paths to be analyzed; if the protection attribute of the path is recoverable, inserting the path into the end of the list of paths to be analyzed.

In an embodiment, the analysis unit is configured to perform a traversal analysis from a second path in the information of paths to be analyzed, and if the path is a new path, then compare the new path with all paths before the new path to determine whether a coincident link or a coincident node exists, and if a coincident link or a coincident node exists, take a union set of a virtual SRLG value of the path coincident with the new path and an SRLG value of the new path; otherwise, continue the comparison until all paths before the new path are completely compared; continue a traversal analysis of a next path in the information of paths to be analyzed, until analyses of SRLG values of all paths identified as new paths in all information of paths to be analyzed are completed.

With the technical solution provided by the disclosure, the configuration of the SRLG value is automatically and simply implemented. The apparatus for generating a shared risk link group provided by the disclosure obtains a virtual SRLG of the client layer through a link analysis of a service layer path, which reduces the number of the SRLGs of the client layer and the changes of the network SRLG of the client layer to some extent, and it causes the acquisition of the network topology information of the client layer to be more accurate and more stable.

The technical solutions in the disclosure are described in detail below with reference to specific application scenarios.

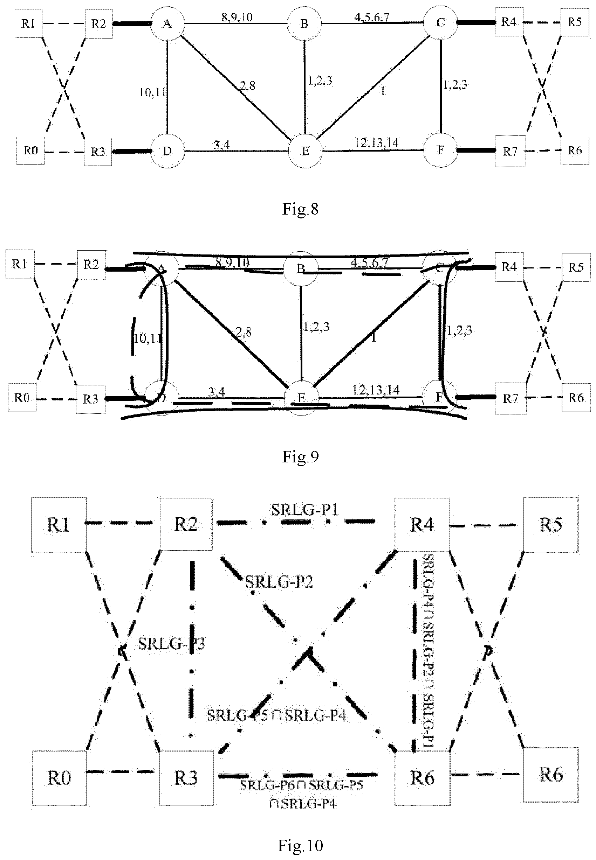

In the following embodiments, it is assumed that Rn represents a node of a client layer, n=0, 1, 2, ..., 7; A, B, C, D, E and F respectively represent a node of a service layer; R2, R3, R4 and R7 are network boundaries of the client layer respectively; A, D, C and F are network boundaries of the service layer respectively; the interface connecting the network boundary of the client layer and the network boundary of the service layer is the user network interface as shown by the heavy line in Fig. 8; the SRLG value of the network link of the service layer is assumed to be shown in Fig. 8. As shown in Fig. 8, a thin solid line represents a link of the service layer, and a dashed line represents a link of the client layer.

### Embodiment 1

Fig. 8 is a topological diagram of a method for generating a shared risk link group according to a first embodiment of the disclosure. As shown in Fig. 8, first, the SRLG values of six links of the client layer are calculated, namely, Link1(A-C), Link2(A-F), Link3(A-D), Link 4(C-F), Link 5(D-C) and Link 6(D-F); it is assumed that the protection attributes of respective links required by the client layer are as follows: Link1(A-C) is unprotected; Link2(A-F) is unprotected; Link3(A-D) is recoverable; Link 4(C-F) is protected; Link 5(D-C) is recoverable; Link 6(D-F) is recoverable; and the protection attribute of the corresponding path of the service layer is consistent with the protection attribute of the link of the client layer . Fig. 9 is a topological diagram of a calculation result of a service layer path of a method for generating a shared risk link group according to a first embodiment of the disclosure. As shown in Fig. 9, it is assumed to be obtained through calculation that the paths of the service layer corresponding to the client layer respectively are Link1(A-C): P1(A-B-C), Link2(A-F): P2(A-E-F), Link3(A-D): P3(A-D), Link4(C-F): P4[(C-F),(C-B-A-D-E-F)], Link5(D-C): P5(D-E-C), Link6(D-F): P6(D-E-F).

Then according to the method for generating a shared risk link group in the disclosure, the obtained service layer path is analyzed as follows.

A new set of path calculation results is received, namely, the newly calculated six paths of the service layer, that is, a list Pb of new path information : [P1(A-B-C), P2 (A-E-F), P3 (A-D), P4 [(C-F), (C-B-A-D-E-F)], P5(D-E-C), P6(D-E-F)], and an ordered list Pa of existing path information is obtained; currently, it is the first calculation, and thus the list Pa of existing path information is empty, that is, Pa= NULL;
according to the method for constructing a list of information of paths to be analyzed as shown in Fig. 4, the list Pc of information of paths to be analyzed is initialized to be the list Pa of existing path information, that is, Pc=Pa;
the first path P1 in the list Pb of new path information is taken, and a virtual SRLG value such as SRLG-P1 is initialized for P1; since the protection attribute of the path is unprotected, P1 is inserted before the first path whose protection attribute is recoverable or whose protection attribute is protected and recoverable in the list Pc of information of paths to be analyzed; since the list Pc of information of paths to be analyzed is empty, P1 is inserted into the first list item position of the list Pc of information of paths to be analyzed, and after insertion, Pc=[P1(A-B-C)];
the second path P2 in the list Pb of new path information is taken, and a virtual SRLG value such as SRLG-P2 is initialized for P2; since the protection attribute of the path is unprotected, P2 is inserted before the first path whose protection attribute is recoverable or whose protection attribute is protected and recoverable in the list Pc of information of paths to be analyzed; since there is no path whose protection attribute is recoverable or whose protection attribute is protected and recoverable in the list Pc of information of paths to be analyzed, the position where P2 is inserted is the second list item position of the list Pc of information of paths to be analyzed, and after insertion, Pc=[P1(A-B-C), P2(A-E-F)];
the third path P3 in the list Pb of information of paths to be analyzed is taken, and a virtual SRLG value such as SRLG-P3 is initialized for P3; since the protection attribute of the path is recoverable, P3 is inserted into the end of the list Pc of information of paths to be analyzed, that is, the third list item position, and after insertion, Pc=[P1(A-B-C), P2(A-E-F), P3(A-D)];
the fourth path P4 in the list Pb of information of paths to be analyzed is taken, and a virtual SRLG value such as SRLG-P4 is initialized for P4; since the protection attribute of the path is protected, P4 is inserted before the first path, i.e. P3, whose protection attribute is recoverable or whose protection attribute is protected and recoverable in the list Pc of information of paths to be analyzed; thus, the position where P4 is inserted is before the path P3 in the list Pc of information of paths to be analyzed, and after insertion, Pc=[P1(A-B-C), P2(A-E-F), P4[(C-F),(C-B-A-D-E-F)], P3(A-D)];
the fifth path P5 in the list Pb of information of paths to be analyzed is taken, and a virtual SRLG value such as SRLG-P5 is initialized for P5; since the protection attribute of the path is recoverable, P5 is inserted into the end of the list Pc of information of paths to be analyzed, and after insertion, Pc=[P1(A-B-C), P2(A-E-F), P4[(C-F), (C-B-A-D-E-F)], P3(A-D), P5(D-E-C)];
the sixth path P6 in the list Pb of information of paths to be analyzed is taken, and a virtual SRLG value such as SRLG-P6 is initialized for P6; since the protection attribute of the path is recoverable, P6 is inserted into the end of the list Pc of information of paths to be analyzed, and after insertion, Pc=[P1(A-B-C), P2(A-E-F), P4[(C-F), (C-B-A-D-E-F)], P3(A-D), P5(D-E-C), P6(D-E-F)];
through the above-mentioned method for constructing the list Pc of information of paths to be analyzed, a formed list of information of paths to be analyzed is Pc=[P 1 (A-B-C), P2(A-E-F), P4[(C-F),(C-B-A-D-E-F)], P3(A-D), P5(D-E-C), P6(D-E-F)].

Then, the above-mentioned constructed list Pc of information of paths to be analyzed is analyzed according to the method for analyzing a risk as shown in Fig. 5. The initial virtual SRLG value of P1 in the list Pc of information of paths to be analyzed is SRLG-P1; P2 in the list Pc of information of paths to be analyzed is taken; the paths of P2(A-E-F) and P1(A-B-C) are compared; the two paths have no coincident links, and therefore, the SRLG value of P2 is still the initial virtual SRLG value SRLG-P2;
P4 in the list Pc of information of paths to be analyzed is taken; the path of P4[(C-F), (C-B-A-D-E-F)] is compared with the paths of P2(A-E-F) and P1(A-B-C), wherein there are coincident links between P4 and P1, and between P4 and P2; therefore, the SRLG value of P4 is a union set of the SRLG values of P4, P1 and P2, that is, SRLG-P4∩SRLG-P2∩SRLG-P1;
P3 in the list Pc of information of paths to be analyzed is taken; the path of P3(A-D) is compared with the paths of P4[(C-F),(C-B-A-D-E-F)], P2(A-E-F) and P1(A-B-C), and there is no coincident link; therefore, the SRLG value of P3 is the initial virtual SRLG value SRLG-P3;
P5 in the list Pc of information of paths to be analyzed is taken; the path of P5(D-E-C) is compared with the paths of P3(A-D), P4[(C-F), (C-B-A-D-E-F)], P2(A-E-F) and P1 (A-B-C), and there are coincident links between P5 and P4; therefore, the SRLG value of P5 is a union set of the SRLG values of both P5 and P4, namely SRLG-P5∩ SRLG-P4;
P6 in the list Pc of information of paths to be analyzed is taken, and the path of P6(D-E-F) is compared with the paths of P5(D-E-C), P3(A-D), P4[(C-F),(C-B-A-D-E-F)], P2(A-E-F) and P1(A-B-C); there are coincident links between P6 and P4, P5; therefore, the SRLG value of P6 is a union set of the SRLG values of P6, P4 and P5, namely SRLG-P6ΠSRLG-PSΠSRLG-P4.

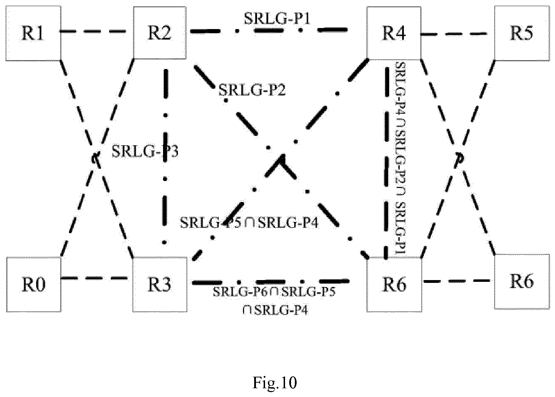

Fig. 10 is a topological diagram of a client layer link and an SRLG value thereof in a first embodiment of a method for generating a shared risk link group in the disclosure. In Fig. 10, a dashed line represents a client layer link, and a dot dash line represents an unactivated virtual circuit of the client layer.

### Embodiment 2

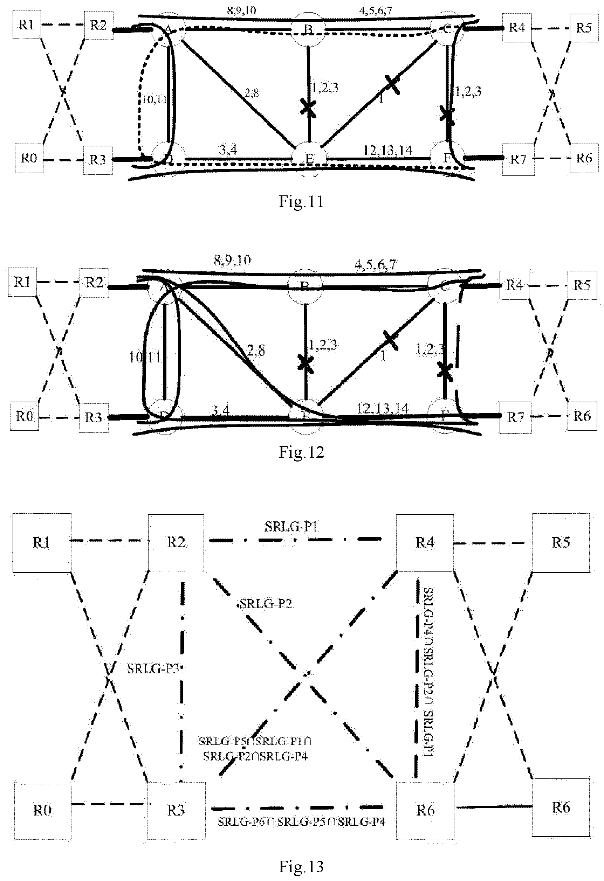

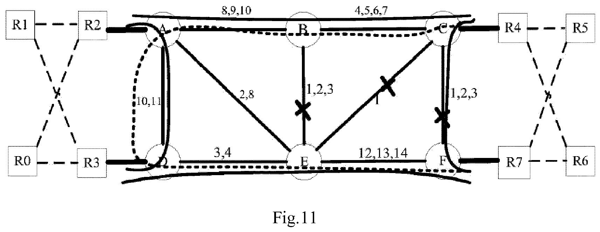

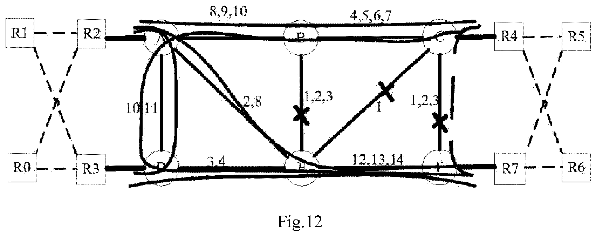

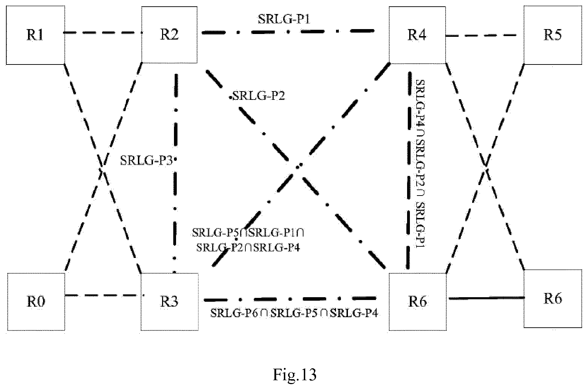

Fig. 11 is a topological diagram of a method for generating a shared risk link group according to a second embodiment of the disclosure. After the first embodiment is implemented, as shown in Fig. 11, it is assumed that links of C-F, C-E and B-E fail at the same time, and after the three links fail, the path of P4 will undergo protection switching and P5 will undergo recovery; it is assumed that the recovered path is P5(D-E-A-B-C). As shown in Fig. 12, Fig. 12 is a topological diagram of a calculation result of a service layer path of a method for generating a shared risk link group according to a second embodiment of the disclosure. The obtained service layer path is calculated and analyzed according to the method for generating a shared risk link group in the disclosure, and among the SRLG values of the six links of the client layer, only one path value has changed. As shown in Fig. 13, Fig. 13 is a topological diagram of a client layer link and an SRLG value thereof in a second embodiment of a method for generating a shared risk link group in the disclosure.

First, a new set of path calculation results is received, that is, a list Pb of information of the current new path. In the second embodiment, there is only one newly-calculated path, namely the new path Pb: [P5(D-E-A-B-C)] after P5 is recovered, and an ordered list Pa of existing path information is obtained, namely the result after the implementation of the first embodiment, Pa: [P1(A-B-C), P2 (A-E-F), P4 [(C-F), (C-B-A-D-E-F)], P3 (A-D), P5 (D-E-C), P6 (D-E-F)].

According to the method for constructing a list to be analyzed as shown in Fig. 4 in the disclosure, the list Pc of information of paths to be analyzed is initialized to be the list Pa of existing path information, which is also the result after the implementation of the first embodiment, that is, Pc=Pa. In the second embodiment, since Pa is not empty, the SRLG values of respective elements in the list Pc of information of paths to be analyzed are modified to be the initial virtual SRLG values, and the first path P5(D-E-A-B-C) in the list Pb of information of the current newly-calculated paths is taken to compare with the path in the list Pa of existing path information; since the list Pa of existing path information includes a path that has the same path identifier as that of P5, the P5(D-E-C) in the list Pc of information of paths to be analyzed is replaced by P5(D-E-A-B-C), and the initial virtual SRLG-P5 value is retained. In this embodiment, there is only one path in the list Pb of information of current newly-calculated paths, and the list Pc of information of paths to be analyzed is completely constructed, and the formed list of information of paths to be analyzed is: Pc=[P1(A-B-C), P2(A-E-F), P4[(C-F),(C-B-A-D-E-F)], P3(A-D), P5(D-E-A-B-C), P6 (D-E-F)]. At the moment, the SRLG values of the paths in the list Pc of information of paths to be analyzed are all initial virtual SRLG values.

According to the method for analyzing a risk as shown in Fig. 5 in the disclosure, the list Pc of information of paths to be analyzed after being reconstructed in this embodiment is analyzed, and the initial virtual SRLG value of P1 in the list Pc of information of paths to be analyzed is SRLG-P1; P2 in the list Pc of information of paths to be analyzed is taken, the paths of P2(A-E-F) and P1(A-B-C) are compared, and the two paths have no coincident links; therefore, the SRLG value of P2 is still the initial virtual SRLG value SRLG-P2;
P4 in the list Pc of information of paths to be analyzed is taken; the path of P4[(C-F), (C-B-A-D-E-F)] is compared with the paths of P2(A-E-F) and P1(A-B-C); there are coincident links between P4 and P1, and between P4 and P2; therefore, the SRLG value of P4 is a union set of the SRLG values of P4, P1 and P2, that is, SRLG-P4∩SRLG-P2∩SRLG-P1;
P3 in the list Pc of information of paths to be analyzed is taken; the path of P3(A-D) is compared with the paths of P4[(C-F), (C-B-A-D-E-F)], P2(A-E-F) and P1(A-B-C), and there is no coincident link; therefore, the SRLG value of P3 is the initial virtual SRLG value SRLG-P3;
P5 in the list Pc of information of paths to be analyzed is taken; the path of P5(D-E-A-B-C) is compared with the paths of P3(A-D), P4[(C-F), (C-B-A-D-E-F)], P2(A-E-F) and P1(A-B-C), and there are coincident links between P5 and P1, P2 and P4 respectively; therefore, the SRLG value of P5 is a union set of the SRLG values of P5, P1, P2 and P4, that is, SRLG-P5∩SRLG-P1∩SRLG-P2∩SRLG-P4;
P6 in the list Pc of information of paths to be analyzed is taken; the path of P6(D-E-F) is compared with the paths of P5((D-E-A-B-C), P3(A-D), P4[(C-F), (C-B-A-D-E-F)], P2(A-E-F) and P1(A-B-C), and there are coincident links between P6 and P4, P5; therefore, the SRLG value of P6 is a union set of the SRLG values of P6, P5 and P4, that is, SRLG-P6ΠSRLG-PSΠSRLG-P4.

### Embodiment 3

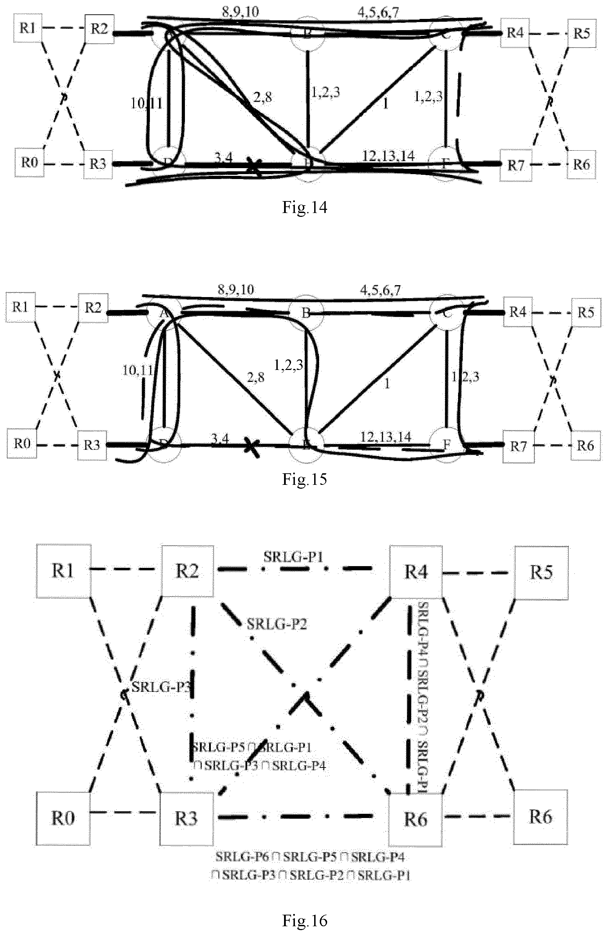

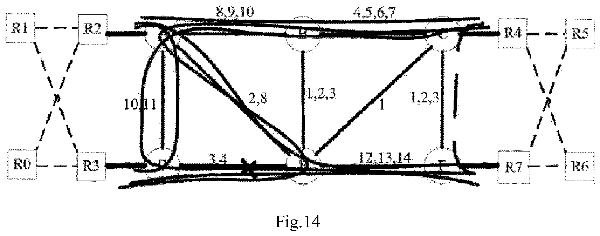

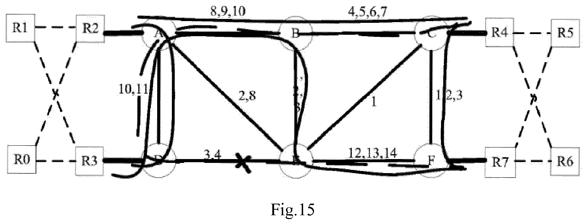

Fig. 14 is a topological diagram before implementation of a third embodiment of a method for generating a shared risk link group in the disclosure. After the implementation of the second embodiment, as shown in Fig. 14, it is assumed that the failures of C-F, C-E and B-E are repaired and D-E failures occur. Fig. 14 shows that the failures of C-F, C-E and B-E are repaired in the third embodiment, and the topology and path information when D-E failures occur. After the D-E link fails, the path of P4 will undergo protection switching, and P5 and P6 will undergo recovery; it is assumed that the recovered paths are P5(D-E-A-B-C) and P6(D-A-B-E-F) respectively. As shown in Fig. 15, Fig. 15 is a topological diagram of a calculation result of a service layer path of a method for generating a shared risk link group according to a third embodiment of the disclosure.

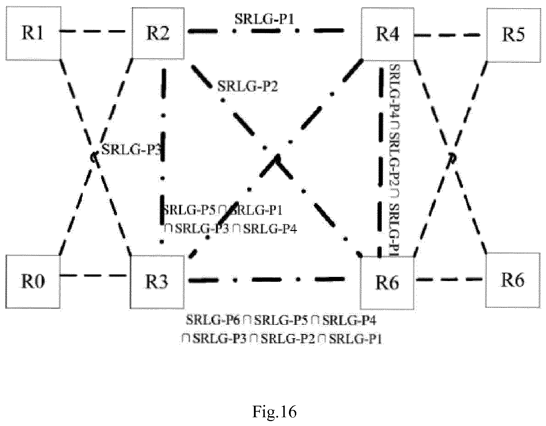

The obtained service layer path is analyzed according to the method for generating a shared risk link group in the disclosure, and among the SRLG values of the six links of the client layer only two link values have changed. As shown in Fig. 16, Fig. 16 is a topological diagram of a client layer link and an SRLG value thereof of a method for generating a shared risk link group according to a third embodiment of the disclosure.

First, a new set of path calculation results is received, that is, the list Pb of information of current new path. In the third embodiment, there are only two newly-calculated paths, namely the new paths Pb: [P5(D-A-B-C)], P6(D-A-B-E-F)] after P5 and P6 are recovered, and an ordered list Pa of existing path information is obtained, namely the result after the implementation of the second embodiment, Pa: [P1(A-B-C), P2 (A-E-F), P4 [(C-F), (C-B-A-D-E-F)], P3(A-D), P5(D-E-A-B-C), P6(D-E-F)].

According to the method for constructing a list to be analyzed as shown in Fig. 4 in the disclosure, the list Pc of information of paths to be analyzed is initialized to be the list Pa of existing path information, which is also the result after the implementation of the second embodiment, that is, Pc=Pa. In the third embodiment, since Pa is not empty, the SRLG values of respective elements in the list Pc of information of paths to be analyzed are modified to be the initial virtual SRLG values, and the first path P5(D-A-B-C) in the list Pb of information of current newly-calculated paths is taken to compare with the paths in the list Pa of existing path information; since the list Pa of existing path information includes a path that has the same path identifier as that of P5, the P5(D-E-A-B-C) in the list Pc of information of paths to be analyzed is replaced by P5(D-A-B-C), and the initial virtual SRLG-P5 value is retained; the second path P6(D-A-B-E-F) in the list Pb of information of current newly-calculated paths is taken to compare with the paths in the list Pa of existing path information; since the list Pa of existing path information includes a path that has the same path identifier as that of P6, the P6(D-E-F) in the list Pc of information of paths to be analyzed is replaced by P6(D-A-B-E-F), and the initial virtual SRLG-P6 value is retained. In this embodiment, there are only two paths in the list Pb of information of current newly-calculated paths, and the list Pc of information of paths to be analyzed is completely constructed, and the formed list Pc of information of paths to be analyzed is: Pc=[P1(A-B-C), P2(A-E-F), P4[(C-F),(C-B-A-D-E-F)], P3(A-D), P5(D-A-B-C), P6 (D-A-B-E-F)]. At the moment, the SRLG values of the paths in the list Pc of information of paths to be analyzed are all initial virtual SRLG values.

According to the method for analyzing a risk as shown in Fig. 5 in the disclosure, the list Pc of information of paths to be analyzed after being reconstructed in this embodiment is analyzed, and the initial virtual SRLG value of P1 in the list Pc of information of paths to be analyzed is SRLG-P1; P2 in the list Pc of information of paths to be analyzed is taken; the paths of P2(A-E-F) and P1(A-B-C) are compared, and the two paths have no coincident links; therefore, the SRLG value of P2 is still the initial virtual SRLG value SRLG-P2;
P4 in the list Pc of information of paths to be analyzed is taken; the path of P4[(C-F), (C-B-A-D-E-F)] is compared with the paths of P2(A-E-F) and P1(A-B-C); there are coincident links between P4 and P1, and between P4 and P2; therefore, the SRLG value of P4 is a union set of the SRLG values of P4, P2 and P1, that is, SRLG-P4∩SRLG-P2∩SRLG-P1;
P3 in the list Pc of information of paths to be analyzed is taken; the path of P3(A-D) is compared with the paths of P4[(C-F), (C-B-A-D-E-F)], P2(A-E-F) and P1(A-B-C), and there is no coincident link; therefore, the SRLG value of P3 is the initial virtual SRLG value SRLG-P3;
P5 in the list Pc of information of paths to be analyzed is taken; the path of P5(D-A-B-C) is compared with the paths of P3(A-D), P4[(C-F), (C-B-A-D-E-F)], P2(A-E-F) and P1(A-B-C), and there are coincident links between P5 and P1, P3, P4 respectively; therefore, the SRLG value of P5 is a union set of the SRLG values of P5, P1, P3 and P4, that is, SRLG-P5∩SRLG-P1∩SRLG-P3∩SRLG-P4;
P6 in the list Pc of information of paths to be analyzed is taken; the path of P6(D-A-B-E-F) is compared with the paths of P5((D-A-B-C), P3(A-D), P4[(C-F), (C-B-A-D-E-F)], P2(A-E-F) and P1(A-B-C), and there are coincident links between P6 and P1, P2, P3, P4, P5 respectively; therefore, the SRLG value of P6 is a union set of the SRLG values of P6, P5, P4, P3, P2 and P1, that is, SRLG-P6∩SRLG-P5∩SRLG-P4∩SRLG-P3∩SRLG-P2∩SRLG-P1.

### Industrial Applicability

In the method and apparatus for generating a shared risk link group provided by the embodiments of the disclosure, a client layer virtual SRLG is obtained through a link analysis of a service layer path, which reduces the number of SRLGs of client layer and the changes of network SRLG of the client layer to some extent, and it can automatically and simply implement the configuration of the SRLG value, and furthermore it causes the acquisition of the network topology information of the client layer to be more accurate and more stable.

## Claims

1. A method for generating a shared risk link group, comprising the steps of:
determining (S200) a list of information of paths to be analyzed according to currently calculated first path information of a service layer and existing second path information, and initializing a Shared Risk Link Group SRLG value of each determined path to be analyzed; and
determining (S201) whether the paths to be analyzed in the list of information of paths to be analyzed coincide, and according to SRLG values of a plurality of paths to be analyzed which paths are determined to be coincident, updating the SRLG value of each path to be analyzed in the plurality of paths to be analyzed which paths are determined to be coincident,
chracterized in that 2.
said determining information of paths to be analyzed comprises: initializing the list of information of paths to be analyzed by using the second path information, and if the second path information is empty, respectively identifying each path in the first path information as a new path, and initializing a virtual SRLG value of each path identified as a new path;
determining, according to a protection attribute of each path identified as a new path in the first path information, a position where each path identified as a new path is inserted into the list of information of paths to be analyzed, so as to form the list of information of paths to be analyzed.

2. The method for generating according to claim 1, the method further comprises:
receiving a path calculation request identifiable in the service layer;
calculating the first path information of the service layer.

3. The method for generating according to claim 1 or 2, the method further comprising:
if the second path information is not empty, traversing the first path information and the second path information respectively; for each path in the first path information, if a path identifier of the path in the first path information exists in the second path information, replacing the path, corresponding to the path identifier in the information of paths to be analyzed, by using the path in the first path information, and retaining an initial virtual SRLG value of the path corresponding to the path identifier, so as to form the list of information of paths to be analyzed

4. The method for generating according to claim 3, the method further comprising:
if the path identifier of the path in the first path information does not exist in the second path information, determining, according to a protection attribute of the path, a position where the path is inserted into the list of information of paths to be analyzed, so as to form the list of information of paths to be analyzed.

5. The method for generating according to claim 1 or 4, wherein said determining, according to a protection attribute of each path identified as a new path in the first path information, a position where each path identified as a new path is inserted into the list of information of paths to be analyzed, so as to form the list of information of paths to be analyzed, comprises:
if a protection attribute of each path identified as a new path is unprotected or protected, inserting each path identified as a new path before a path that is firstly identified as a new path and has a protection attribute of being recoverable in a list of the paths to be analyzed;
if a protection attribute of each path identified as a new path is recoverable, inserting each path identified as a new path into the end of the list of the paths to be analyzed.

6. The method for generating according to claim 1 or 2, wherein said determining whether the paths to be analyzed in the list of information of paths to be analyzed coincide, and according to the SRLG values of a plurality of paths to be analyzed which paths are determined to be coincident, updating the SRLG value of each path to be analyzed in the plurality of paths to be analyzed which paths are determined to be coincident, comprises:
performing a traversal analysis from a second path in the list of information of paths to be analyzed, and if the path is a new path, comparing the new path with all paths before the new path to judge whether a coincident link or a coincident node exists, and if a coincident link or a coincident node exists, taking a union set of a virtual SRLG value of the path coincident with the new path and an SRLG value of the new path; otherwise, continuing the comparison until all paths before the new path are completely compared;
continuing a traversal analysis of a next path in the list of information of paths to be analyzed, until analyses of SRLG values of all new paths in the list of information of paths to be analyzed are completed.

7. An apparatus for generating a shared risk link group, comprising: a calculation unit, an analysis unit and a storage unit, wherein
the calculation unit, configured to determine a list of information of paths to be analyzed according to currently calculated first path information of a service layer and existing second path information, and initialize a Shared Risk Link Group SRLG value of each determined path to be analyzed;
the analysis unit, configured to determine whether the paths to be analyzed in the information of paths to be analyzed coincide, and according to SRLG values of a plurality of paths to be analyzed which paths are determined to be coincident, update SRLG value of each path to be analyzed in the plurality of paths to be analyzed which paths are determined to be coincident; and store a result of the analysis in the storage unit;
the storage unit, configured to store the existing second path information and the first path information currently calculated,
**characterized in that**
the calculation unit is further configured to determine the list of information of paths to be analyzed by means of:
initializing the list of information of paths to be analyzed by using the second path information, and if the second path information is empty, respectively identifying each path in the first path information as a new path, and initializing a virtual SRLG value of each path identified as a new path; determining, according to a protection attribute of each path identified as a new path in the first path information, a position where each path identified as a new path is inserted into the list of information of paths to be analyzed, so as to form the list of information of paths to be analyzed

8. The apparatus for generating according to claim 7, wherein the calculation unit, further configured to receive a path calculation request identifiable in the service layer; calculate the first path information and store the first path information in the storage unit.

9. The apparatus for generating according to claim 7 or 8, wherein the calculation unit, further configured to send a path data acquisition request to the storage unit and receive path information from the storage unit;
the analysis unit, further configured to send a path data acquisition request to the storage unit and receive path information from the storage unit.

10. The apparatus for generating according to claim 7 or 8, wherein the storage unit, specifically configured to receive an analysis result from the analysis unit and store an analyzed path result; receive the data acquisition request from the calculation unit and return a stored analyzed path result to the calculation unit; receive the data acquisition request from the analysis unit and return a stored analyzed path result to the analysis unit.

11. The apparatus for generating according to claim 7 or 8, wherein the calculation unit configured to determine the list of information of paths to be analyzed by means of:
if the second path information is not empty, traversing the first path information and the second path information respectively; for each path in the first path information, if a path identifier of the path in the first path information exists in the second path information, replacing the path, corresponding to the path identifier in the list of information of paths to be analyzed, by using the path in the first path information, and retaining an initial virtual SRLG value of the path corresponding to the path identifier, so as to form the list of information of paths to be analyzed;
if the path identifier of the path in the first path information does not exist in the second path information, determining, according to a protection attribute of the path, a position where the path is inserted into the list of information of paths to be analyzed, so as to form the list of information of paths to be analyzed

12. The apparatus for generating according to claim 7or 8, wherein the calculation unit configured to determine, according to a protection attribute of each path identified as a new path in the first path information, a position where each path identified as a new path is inserted into the list of information of paths to be analyzed, so as to form the list of information of paths to be analyzed, by means of
if a protection attribute of each path identified as a new path is unprotected or protected, inserting each path identified as a new path before a path that is firstly identified as a new path and has a protection attribute of being recoverable in a list of the paths to be analyzed;
if a protection attribute of the path is recoverable, inserting the path into the end of the list of the paths to be analyzed.

13. The apparatus for generating according to claim 7 or 8, wherein the analysis unit, configured to:
perform a traversal analysis from a second path in the list of information of paths to be analyzed, and if the path is a new path, compare the new path with all paths before the new path to judge whether a coincident link or a coincident node exists, and if a coincident link or a coincident node exists, take a union set of a virtual SRLG value of the path coincident with the new path and an SRLG value of the new path; otherwise, continue the comparison until all paths before the new path are completely compared;
continue a traversal analysis of a next path in the list of information of paths to be analyzed, until analyses of SRLG values of all new paths in the list of information of paths to be analyzed are completed.

14. A computer readable storage medium, storing a computer program, the computer program configured to perform the method for generating a shared risk link group according to any one of claims 1-6.

## Patentansprüche

1. Verfahren zur Erzeugung einer gemeinsamen Risikoverbindungsgruppe, beinhaltend die folgenden Schritte:
Bestimmen (S200) einer Liste von Informationen über zu analysierende Pfade gemäß aktuell berechneten ersten Pfadinformationen einer Dienstebene und vorhandenen zweiten Pfadinformationen, und Initialisieren eines Shared Risk Link Group SRLG-Wertes jedes bestimmten zu analysierenden Pfades; und
Bestimmen (S201), ob die zu analysierenden Pfade in der Liste von Informationen der zu analysierenden Pfade übereinstimmen, und gemäß den SRLG-Werten einer Vielzahl von zu analysierenden Pfaden, die als übereinstimmend bestimmt sind , Aktualisieren des SRLG-Wertes jedes zu analysierenden Pfades in der Vielzahl von zu analysierenden Pfaden, die als übereinstimmend bestimmt sind,
**dadurch gekennzeichnet, dass** die Bestimmung von Informationen über zu analysierende Pfade umfasst:
Initialisierung der Liste von Informationen über zu analysierende Pfade unter Verwendung der zweiten Pfadinformation, und wenn die zweite Pfadinformation leer ist, Identifizierung jedes Pfades in der ersten Pfadinformation als neuer Pfad, und Initialisierung eines virtuellen SRLG-Wertes für jeden Pfad, der als neuer Pfad identifiziert wurde;
Bestimmen, gemäß einem Schutzattribut jedes Pfades, der als neuer Pfad in der ersten Pfadinformation identifiziert wurde, einer Position, an der jeder Pfad, der als neuer Pfad identifiziert wurde, in die Liste der Informationen der zu analysierenden Pfade eingefügt wird, um so die Liste der Informationen der zu analysierenden Pfade zu bilden.

2. Verfahren zur Erzeugung nach Anspruch 1, wobei das Verfahren ferner umfasst:
Empfang eines in der Dienstschicht identifizierbaren Antrags auf Pfadberechnung;
die Berechnung der ersten Pfadinformationen der Dienstebene.

3. Verfahren zur Erzeugung nach Anspruch 1 oder 2, wobei das Verfahren ferner umfasst:
wenn die zweite Pfadinformation nicht leer ist, Durchlaufen der ersten Pfadinformation bzw. der zweiten Pfadinformation; für jeden Pfad in der ersten Pfadinformation, wenn ein Pfadidentifikator des Pfades in der ersten Pfadinformation in der zweiten Pfadinformation existiert, Ersetzen des Pfades, der dem Pfadidentifikator in der Information der zu analysierenden Pfade entspricht, durch Verwendung des Pfades in der ersten Pfadinformation, und Beibehalten eines anfänglichen virtuellen SRLG-Wertes des Pfades, der dem Pfadidentifikator entspricht, um die Liste der Information der zu analysierenden Pfade zu bilden.

4. Verfahren zur Erzeugung gemäß Anspruch 3, wobei das Verfahren ferner umfasst:
wenn der Pfad-Identifikator des Pfades in der ersten Pfad-Information nicht in der zweiten Pfad-Information existiert, Bestimmen, gemäß einem Schutz-Attribut des Pfades, einer Position, wo der Pfad in die Liste der Information der zu analysierenden Pfade eingefügt wird, um so die Liste der Information der zu analysierenden Pfade zu bilden.

5. Verfahren zum Erzeugen nach Anspruch 1 oder 4, wobei das Bestimmen, gemäß einem Schutzattribut jedes Pfades, der als neuer Pfad in der ersten Pfadinformation identifiziert wurde, einer Position, an der jeder Pfad, der als neuer Pfad identifiziert wurde, in die Liste der Informationen der zu analysierenden Pfade eingefügt wird, um die Liste der Informationen der zu analysierenden Pfade zu bilden, umfasst:
wenn ein Schutzattribut jedes Pfades, der als neuer Pfad identifiziert wurde, ungeschützt oder geschützt ist, Einfügen jedes Pfades, der als neuer Pfad identifiziert wurde, vor einem Pfad, der zuerst als neuer Pfad identifiziert wurde und ein Schutzattribut hat, wiederherstellbar zu sein, in eine Liste der zu analysierenden Pfade;
wenn ein Schutzattribut jedes als neuen Pfad identifizierten Pfads wiederherstellbar ist, Einfügen jedes als neuen Pfad identifizierten Pfads an das Ende der Liste der zu analysierenden Pfade.

6. Verfahren zum Erzeugen nach Anspruch 1 oder 2, wobei das Bestimmen, ob die zu analysierenden Pfade in der Liste der Informationen der zu analysierenden Pfade übereinstimmen, und gemäß den SRLG-Werten einer Vielzahl von zu analysierenden Pfaden, die als übereinstimmend bestimmt sind, das Aktualisieren des SRLG-Wertes jedes zu analysierenden Pfades in der Vielzahl von zu analysierenden Pfaden, die als übereinstimmend bestimmt sind, umfasst:
Durchführen einer Traversalanalyse von einem zweiten Pfad in der Liste der Informationen der zu analysierenden Pfade, und wenn der Pfad ein neuer Pfad ist, Vergleichen des neuen Pfades mit allen Pfaden vor dem neuen Pfad, um zu beurteilen, ob eine übereinstimmende Verbindung oder ein übereinstimmender Knoten existiert, und wenn eine übereinstimmende Verbindung oder ein übereinstimmender Knoten existiert, Nehmen einer Vereinigungsmenge eines virtuellen SRLG-Wertes des Pfades, der mit dem neuen Pfad übereinstimmt, und eines SRLG-Wertes des neuen Pfades; andernfalls Fortsetzen des Vergleichs, bis alle Pfade vor dem neuen Pfad vollständig verglichen sind;
Fortsetzung einer Traversalanalyse eines nächsten Pfades in der Liste der Informationen der zu analysierenden Pfade, bis die Analysen der SRLG-Werte aller neuen Pfade in der Liste der Informationen der zu analysierenden Pfade abgeschlossen sind.

7. Vorrichtung zur Erzeugung einer gemeinsamen Risikoverbindungsgruppe, umfassend: eine Berechnungseinheit, eine Analyseeinheit und eine Speichereinheit, wobei
die Berechnungseinheit, die so konfiguriert ist, dass sie eine Liste an Informationen über zu analysierende Pfade gemäß aktuell berechneten ersten Pfadinformationen einer Dienstebene und vorhandenen zweiten Pfadinformationen bestimmt und einen Wert für die gemeinsame Risikoverbindungsgruppe SRLG (Shared Risk Link Group) für jeden bestimmten zu analysierenden Pfad initialisiert;
die Analyseeinheit, die konfiguriert ist, um zu bestimmen, ob die zu analysierenden Pfade in den Informationen der zu analysierenden Pfade übereinstimmen, und gemäß den SRLG-Werten einer Vielzahl von zu analysierenden Pfaden, die als übereinstimmend bestimmt sind, den SRLG-Wert jedes zu analysierenden Pfades in der Vielzahl von zu analysierenden Pfaden, die als übereinstimmend bestimmt sind, zu aktualisieren; und ein Ergebnis der Analyse in der Speichereinheit zu speichern;
die Speichereinheit, die so konfiguriert ist, dass sie die vorhandenen zweiten Pfadinformationen und die aktuell berechneten ersten Pfadinformationen speichert,
**dadurch gekennzeichnet, dass** die Berechnungseinheit ferner so konfiguriert ist, dass sie die Liste der Informationen über die zu analysierenden Pfade mit Hilfe von folgendem bestimmt:
Initialisieren die Liste der Information der zu analysierenden Pfade unter Verwendung der zweiten Pfadinformation, und, wenn die zweite Pfadinformation leer ist, jeweiliges Identifizieren jedes Pfades in der ersten Pfadinformation als einen neuen Pfad, und Initialisieren eines virtuellen SRLG-Wertes jedes Pfades, der als ein neuer Pfad identifiziert wurde; Bestimmen, gemäß einem Schutzattribut jedes Pfades, der als ein neuer Pfad in der ersten Pfadinformation identifiziert wurde, einer Position, an der jeder Pfad, der als ein neuer Pfad identifiziert wurde, in die Liste der Informationen der zu analysierenden Pfade eingefügt wird, um die Liste der Informationen der zu analysierenden Pfade zu bilden.

8. Erzeugungsvorrichtung nach Anspruch 7, wobei die Berechnungseinheit ferner so konfiguriert ist, dass sie eine in der Dienstschicht identifizierbare Pfadberechnungsanforderung empfängt, die erste Pfadinformation berechnet und die erste Pfadinformation in der Speichereinheit speichert.

9. Erzeugungsvorrichtung nach Anspruch 7 oder 8, wobei die Berechnungseinheit ferner so konfiguriert ist, dass sie eine Pfaddatenerfassungsanforderung an die Speichereinheit sendet und Pfadinformationen von der Speichereinheit empfängt;
die Analyseeinheit, die ferner so konfiguriert ist, dass sie eine Pfaddatenerfassungsanforderung an die Speichereinheit sendet und Pfadinformationen von der Speichereinheit empfängt.

10. Erzeugungsvorrichtung nach Anspruch 7 oder 8, wobei die Speichereinheit insbesondere so konfiguriert ist, dass sie ein Analyseergebnis von der Analyseeinheit empfängt und ein analysiertes Pfadergebnis speichert; die Datenerfassungsanforderung von der Berechnungseinheit empfängt und ein gespeichertes analysiertes Pfadergebnis an die Berechnungseinheit zurückgibt; die Datenerfassungsanforderung von der Analyseeinheit empfängt und ein gespeichertes analysiertes Pfadergebnis an die Analyseeinheit zurückgibt.

11. Erzeugungsvorrichtung nach Anspruch 7 oder 8, wobei die Berechnungseinheit so konfiguriert ist, dass sie die Liste der Informationen der zu analysierenden Pfade mit Hilfe von folgendem bestimmt:
wenn die zweite Pfadinformation nicht leer ist, Durchlaufen der ersten Pfadinformation bzw. der zweiten Pfadinformation; für jeden Pfad in der ersten Pfadinformation, wenn ein Pfadidentifikator des Pfades in der ersten Pfadinformation in der zweiten Pfadinformation existiert, Ersetzen des Pfades, der dem Pfadidentifikator in der Information der zu analysierenden Pfade entspricht, durch Verwendung des Pfades in der ersten Pfadinformation, und Beibehalten eines anfänglichen virtuellen SRLG-Wertes des Pfades, der dem Pfadidentifikator entspricht, um die Liste der Information der zu analysierenden Pfade zu bilden;
wenn der Pfadidentifikator des Pfades in der ersten Pfadinformation nicht in der zweiten Pfadinformation existiert, Bestimmen einer Position, an der der Pfad in die Information der zu analysierenden Pfade eingefügt wird, gemäß einem Schutzattribut des Pfades, um die Liste der Informationen der zu analysierenden Pfade zu bilden.

12. Vorrichtung zum Erzeugen gemäß Anspruch 7 oder 8, wobei die Berechnungseinheit so konfiguriert ist, dass sie gemäß einem Schutzattribut jedes Pfades, der als ein neuer Pfad in der ersten Pfadinformation identifiziert wurde, eine Position bestimmt, an der jeder Pfad, der als ein neuer Pfad identifiziert wurde, in die Liste der Informationen der zu analysierenden Pfade eingefügt wird, um so die Liste der Informationen der zu analysierenden Pfade zu bilden, mittels der folgenden Schritte:
wenn ein Schutzattribut jedes Pfades, der als neuer Pfad identifiziert wurde, ungeschützt oder geschützt ist, Einfügen jedes Pfades, der als neuer Pfad identifiziert wurde, vor einem Pfad, der zuerst als neuer Pfad identifiziert wurde und ein Schutzattribut hat, wiederherstellbar zu sein, in eine Liste der zu analysierenden Pfade;
wenn ein Schutzattribut des Pfades wiederherstellbar ist, Einfügen des Pfades am Ende der Liste der zu analysierenden Pfade.

13. Vorrichtung zur Erzeugung nach Anspruch 7 oder 8, wobei die Analyseeinheit so konfiguriert ist, dass sie:
eine Traversalanalyse von einem zweiten Pfad in der Liste der Informationen der zu analysierenden Pfade durchführen, und wenn der Pfad ein neuer Pfad ist, den neuen Pfad mit allen Pfaden vor dem neuen Pfad vergleichen, um zu beurteilen, ob eine übereinstimmende Verbindung oder ein übereinstimmender Knoten existiert, und wenn eine übereinstimmende Verbindung oder ein übereinstimmender Knoten existiert, eine Vereinigungsmenge eines virtuellen SRLG-Wertes des Pfades, der mit dem neuen Pfad übereinstimmt, und eines SRLG-Wertes des neuen Pfades nehmen; andernfalls den Vergleich fortsetzen, bis alle Pfade vor dem neuen Pfad vollständig verglichen sind;
eine Traversalanalyse eines nächsten Pfades in der Liste der Informationen der zu analysierenden Pfade fortsetzen, bis die Analysen der SRLG-Werte aller neuen Pfade in der Liste der Informationen der zu analysierenden Pfade abgeschlossen sind.

14. Computerlesbares Speichermedium, das ein Computerprogramm speichert, wobei das Computerprogramm so konfiguriert ist, dass es das Verfahren zur Erzeugung einer gemeinsamen Risikoverbindungsgruppe nach einem der Ansprüche 1 bis 6 durchführt.

## Revendications

1. Méthode de création d'un groupe de liens à risques partagés, comprenant les étapes suivantes :
déterminer (S200) une liste des informations sur les chemins à analyser en fonction des premières informations calculées sur le chemin d'une couche de service et des deuxièmes informations existantes sur le chemin, et initialiser une valeur SRLG (Shared Risk Link Group) pour chaque chemin déterminé à analyser ; et
déterminer (S201) si les chemins à analyser dans la liste des informations sur les chemins à analyser coïncident et, en fonction des valeurs SRLG d'une pluralité de chemins à analyser dont les chemins sont déterminés comme étant coïncidents , mettre à jour la valeur SRLG de chaque chemin à analyser dans la pluralité de chemins à analyser dont les chemins sont déterminés comme étant coïncidents,
**caractérisé en ce que** la liste des informations de détermination des chemins à analyser comprennent :
initialiser la liste des informations sur les chemins à analyser en utilisant les secondes informations sur les chemins, et si les secondes informations sur les chemins sont vides, identifier respectivement chaque chemin dans les premières informations sur les chemins comme un nouveau chemin, et initialiser une valeur SRLG virtuelle pour chaque chemin identifié comme un nouveau chemin ;
déterminer, en fonction d'un attribut de protection de chaque chemin identifié comme nouveau chemin dans les premières informations sur le chemin, une position où chaque chemin identifié comme nouveau chemin est inséré dans la liste des informations sur les chemins à analyser, de manière à former la liste des informations sur les chemins à analyser.

2. La méthode de production selon la revendication 1, la méthode comprend en outre :
recevoir une demande de calcul de chemin identifiable dans la couche de service ;
calculer les premières informations sur le chemin d'accès de la couche de service.

3. Méthode de production selon la revendication 1 ou 2, la méthode comprenant en outre :
si la deuxième information sur le chemin n'est pas vide, parcourir respectivement la première information sur le chemin et la deuxième information sur le chemin ; pour chaque chemin dans la première information sur le chemin, si un identificateur de chemin du chemin dans la première information sur le chemin existe dans la deuxième information sur le chemin, remplacer le chemin correspondant à l'identificateur de chemin dans l'information sur les chemins à analyser en utilisant le chemin dans la première information sur le chemin, et conserver une valeur SRLG virtuelle initiale du chemin correspondant à l'identificateur de chemin, de manière à former la liste des informations sur les chemins à analyser.

4. Méthode de production selon la revendication 3, la méthode comprenant en outre :
si l'identifiant du chemin dans la première information sur le chemin n'existe pas dans la deuxième information sur le chemin, déterminer, en fonction d'un attribut de protection du chemin, une position où le chemin est inséré dans la liste des informations sur les chemins à analyser, de manière à former la liste des informations sur les chemins à analyser.

5. Le procédé de génération selon la revendication 1 ou 4, dans lequel ladite détermination, en fonction d'un attribut de protection de chaque chemin identifié comme nouveau chemin dans la première information de chemin, d'une position où chaque chemin identifié comme nouveau chemin est inséré dans la liste des informations de chemins à analyser, de manière à former la liste des informations de chemins à analyser, comprend :
si un attribut de protection de chaque chemin identifié comme nouveau chemin est non protégé ou protégé, insérer chaque chemin identifié comme nouveau chemin avant un chemin qui est d'abord identifié comme nouveau chemin et dont l'attribut de protection est récupérable dans une liste des chemins à analyser ;
si un attribut de protection de chaque chemin identifié comme nouveau chemin est récupérable, insérer chaque chemin identifié comme nouveau chemin à la fin de la liste des chemins à analyser.

6. Méthode de génération selon la revendication 1 ou 2, dans laquelle ladite détermination de la coïncidence des chemins à analyser dans la liste des informations des chemins à analyser, et en fonction des valeurs SRLG d'une pluralité de chemins à analyser dont les chemins sont déterminés comme coïncidents, la mise à jour de la valeur SRLG de chaque chemin à analyser dans la pluralité de chemins à analyser dont les chemins sont déterminés comme coïncidents, comprend :
effectuer une analyse de traversée à partir d'un deuxième chemin dans les informations sur les chemins à analyser, et si le chemin est un nouveau chemin, comparer le nouveau chemin avec tous les chemins précédant le nouveau chemin pour déterminer s'il existe un lien de coïncidence ou un noeud de coïncidence, et si un lien de coïncidence ou un noeud de coïncidence existe, prendre un ensemble d'union d'une valeur SRLG virtuelle du chemin coïncidant avec le nouveau chemin et d'une valeur SRLG du nouveau chemin ; sinon, poursuivre la comparaison jusqu'à ce que tous les chemins précédant le nouveau chemin soient complètement comparés ;
poursuivre l'analyse d'un chemin suivant dans la liste des informations sur les chemins à analyser, jusqu'à ce que les analyses des valeurs SRLG de tous les nouveaux chemins dans la liste des informations sur les chemins à analyser soient terminées.

7. Appareil permettant de générer un groupe de liens à risques partagés, comprenant : une unité de calcul, une unité d'analyse et une unité de stockage, dans lequel
l'unité de calcul, configurée pour déterminer la liste des informations sur les chemins à analyser en fonction des informations sur le premier chemin d'une couche de service actuellement calculées et des informations sur le deuxième chemin existant, et pour initialiser une valeur SRLG (Shared Risk Link Group) pour chaque chemin déterminé à analyser ;
l'unité d'analyse, configurée pour déterminer si les chemins à analyser dans les informations sur les chemins à analyser coïncident, et en fonction des valeurs SRLG d'une pluralité de chemins à analyser dont les chemins sont déterminés comme coïncidents, mettre à jour la valeur SRLG de chaque chemin à analyser dans la pluralité de chemins à analyser dont les chemins sont déterminés comme coïncidents ; et stocker un résultat de l'analyse dans l'unité de stockage ;
l'unité de stockage, configurée pour stocker les deuxièmes informations de trajet existantes et les premières informations de trajet actuellement calculées,
**caractérisé en ce que** l'unité de calcul est en outre configurée pour déterminer la liste des informations sur les chemins à analyser au moyen de :
initialiser la liste des informations sur les chemins à analyser en utilisant les secondes informations sur les chemins, et si les secondes informations sur les chemins sont vides, identifier respectivement chaque chemin dans les premières informations sur les chemins comme un nouveau chemin, et initialiser une valeur SRLG virtuelle de chaque chemin identifié comme un nouveau chemin ; déterminer, en fonction d'un attribut de protection de chaque chemin identifié comme un nouveau chemin dans les premières informations sur les chemins, une position où chaque chemin identifié comme un nouveau chemin est inséré dans la liste des informations sur les chemins à analyser, de manière à former la liste des informations sur les chemins à analyser.

8. Appareil de génération selon la revendication 7, dans lequel l'unité de calcul est en outre configurée pour recevoir une demande de calcul de chemin identifiable dans la couche de service, calculer la première information de chemin et stocker la première information de chemin dans l'unité de stockage.

9. Appareil de génération selon la revendication 7 ou 8, dans lequel l'unité de calcul est en outre configurée pour envoyer une demande d'acquisition de données de trajectoire à l'unité de stockage et recevoir des informations de trajectoire de l'unité de stockage ;
l'unité d'analyse, configurée en outre pour envoyer une demande d'acquisition de données de trajectoire à l'unité de stockage et recevoir des informations de trajectoire de l'unité de stockage.

10. Appareil de génération selon la revendication 7 ou 8, dans lequel l'unité de stockage est spécifiquement configurée pour recevoir un résultat d'analyse de l'unité d'analyse et stocker un résultat de chemin analysé ; recevoir la demande d'acquisition de données de l'unité de calcul et renvoyer un résultat de chemin analysé stocké à l'unité de calcul ; recevoir la demande d'acquisition de données de l'unité d'analyse et renvoyer un résultat de chemin analysé stocké à l'unité d'analyse.

11. L'appareil de génération selon la revendication 7 ou 8, dans lequel l'unité de calcul configurée pour déterminer la liste des informations des chemins à analyser au moyen de :
si la deuxième information sur le chemin n'est pas vide, parcourir respectivement la première information sur le chemin et la deuxième information sur le chemin ; pour chaque chemin dans la première information sur le chemin, si un identificateur de chemin du chemin dans la première information sur le chemin existe dans la deuxième information sur le chemin, remplacer le chemin correspondant à l'identificateur de chemin dans l'information sur les chemins à analyser en utilisant le chemin dans la première information sur le chemin, et conserver une valeur SRLG virtuelle initiale du chemin correspondant à l'identificateur de chemin, de manière à former la liste des informations sur les chemins à analyser ;
si l'identifiant du chemin dans la première information sur le chemin n'existe pas dans la deuxième information sur le chemin, déterminer, en fonction d'un attribut de protection du chemin, une position où le chemin est inséré dans la liste des informations sur les chemins à analyser, de manière à former la liste des informations sur les chemins à analyser.

12. Le dispositif de génération selon la revendication 7ou 8, dans lequel l'unité de calcul configurée pour déterminer, en fonction d'un attribut de protection de chaque chemin identifié comme nouveau chemin dans la première information de chemin, une position où chaque chemin identifié comme nouveau chemin est inséré dans la liste des informations de chemins à analyser, de façon à former la liste des informations de chemins à analyser, au moyen de :
si un attribut de protection de chaque chemin identifié comme nouveau chemin est non protégé ou protégé, insérer chaque chemin identifié comme nouveau chemin avant un chemin qui est d'abord identifié comme nouveau chemin et dont l'attribut de protection est récupérable dans une liste de chemins à analyser ;
si un attribut de protection du chemin est récupérable, insérer le chemin à la fin de la liste des chemins à analyser.

13. L'appareil de production selon la revendication 7 ou 8, dans lequel l'unité d'analyse est configurée pour :
effectuer une analyse de traversée à partir d'un deuxième chemin dans la liste des informations sur les chemins à analyser et, si le chemin est un nouveau chemin, comparer le nouveau chemin avec tous les chemins précédant le nouveau chemin pour déterminer s'il existe un lien de coïncidence ou un noeud de coïncidence et, si un lien de coïncidence ou un noeud de coïncidence existe, prendre un ensemble d'union d'une valeur SRLG virtuelle du chemin coïncidant avec le nouveau chemin et d'une valeur SRLG du nouveau chemin ; sinon, poursuivre la comparaison jusqu'à ce que tous les chemins précédant le nouveau chemin aient été complètement comparés ;
poursuivre l'analyse d'un chemin suivant dans la liste des informations sur les chemins à analyser, jusqu'à ce que les analyses des valeurs SRLG de tous les nouveaux chemins dans la liste des informations sur les chemins à analyser soient terminées.

14. Support de stockage lisible par ordinateur, stockant un programme d'ordinateur, le programme d'ordinateur étant configuré pour exécuter la méthode de génération d'un groupe de liaison à risque partagé selon l'une des revendications 1 à 6.
